# EUROPEAN PATENT SPECIFICATION

(11) **EP 0 839 239 B1**
(45) Date of publication and mention of the grant of the patent: **19.09.2001**
(21) Application number: 96923994.6
(22) Date of filing: 12.07.1996
(51) Int. Cl.: E04B 1/61, E04F 13/08

(54) **A DEVICE FOR ATTACHING A WALL ELEMENT TO A BACKING STRUCTURE**
VORRICHTUNG ZUM BEFESTIGEN EINES WANDELEMENTS AN EINER TRAGSTRUKTUR
DISPOSITIF POUR FIXER UN ELEMENT FORMANT PAROI SUR UNE STRUCTURE DE SUPPORT

(30) Priority: 14.07.1995 FI 953436
(43) Date of publication of application: 06.05.1998
(73) Proprietor: Paroc Group Oy Ab, 01300 Vantaa (FI)
(72) Inventor: RANTAKYLÄ, Kari, FIN-20540 Turku (FI)
(74) Representative: Haimelin, Jukka Ilmari
(86) International application number: FI9600412
(87) International publication number: WO9704190

(56) References cited:
- WO-A-89/12149
- US-A- 4 037 377
- US-A- 4 177 615
- US-A- 4 184 301
- US-A- 4 316 351

## Description

The present invention is related to a device for attaching a panel-type wall element to a backing structure. The panel, for which the fastening device is designed, comprises at least an outer skin lining and a thermal insulation placed under said skin lining. The fastening device is also suitable for mounting such a wall panel in which the outer skin lining is complemented with an inner balance skin lining placed on the opposed side of the thermal insulation core. The skin is conventionally made from sheet metal, and mineral wool is used as the thermal insulation core. The outer skin members are fixed to the thermal insulation, advantageously by adhesive bonding. To make the wall panel resistant to wind forces and thermal expansion stresses, the panel must be fastened to its backing structure at least by its outer skin. A wall panel having an inner balance skin may also be anchored by its inner skin lining to the backing structure. In such a wall panel, the corners of at least one edge of the panel are shaped so that the complementary shapes of the edge corners form a tongue-and-groove joint serving to join adjacent panels to each other.

For aesthetic reasons, the such panels are preferably fastened to their backing structure so that no discernible marks of the fixtures remain visible on the ready-installed exterior wall. This kind of mounting method presumes the fastening to be made using members that are embedded in the joint structure and concealed therein, such members being exemplified by the fastening member embodiment disclosed in the international application publication No. WO-A-89/12149. This approach is based on a fastening member designed to grip the tongue-and-groove joint edge of the panel, said fastening member being attached to the wall structure by means of a fastening system remaining concealed under the mounted panels. The fastening member is shaped to fit between the tongue-and-groove joints of the wall panels being joined at their edges to each other.

While the above-described fastening method is highly functional in terms of panel anchoring, it is hampered by the drawback that the fastening element remains in the tongue-and-groove joint formed by the adjacent mating surfaces of the skin linings, thus unavoidably causing an untight joint over those lengths of the joint between the panels that are not gapped by the fastening device. Furthermore, such a fastening arrangement uses a metallic member extending through the entire joint gap from the outer side to the inner side of the wall. This member thus acts as an effective thermal bridge, which particularly in this type of wall panel forms, in addition to the above-mentioned untightness of the joint, a shortcoming in terms of fire resistance.

From the later published FI Pat. Appl. No. 940751 is also known a fastening member for wall panels, said member being comprised of a sheet metal fixture which is adapted to align longitudinally along the joint between the panels being joined and is moulded to a shape conformant with the cross section of the joint. One end of the fixture is shaped for anchoring to the backing surface, while the other end is bent for gripping the outer skin lining of the wall panel being installed, from under a pleat made to the edge of the panel.

A wall panel comprising linings and a mineral wool core placed between them is inherently highly fire-resistant. In a properly erected wall, the thermal insulations should form a tightly abutting joint between the adjacent insulating panels, whereby the joint becomes tight without incorporating any fastening members capable of forming a thermal bridge through the joint. It is thus an object of the present invention to achieve a reliable fastening system for such wall panels that is capable of providing positive and indiscernible anchoring of the panels to a backing structure with a minimal impairment of thermal insulation at the joint between adjacent panels.

The goal of the invention is achieved by virtue of a fastening device comprising the combination of Features of appended claim 1.

The fastening system disclosed herein achieves fastening of panels to a backing structure so that the interpanel joint will be free from members that could disturb an intimate mating of the tongue-and-groove joint surfaces of adjacent skin-structure panels. Those members of the fastening device that extend into the interpanel joint area can be adapted into such a region of the thermal insulation in the wall panels that can embed said members by yielding in a resilient manner, or alternatively, the edges of the thermal insulation can be provided with suitable recesses to accommodate the gripping members of the fastening device. Then, the fastening device will not cause any disturbance to the tightness of a finished joint or impair its fire resistance properties. Furthermore, the members of the fastening device will be mainly concealed within the thermal insulation against any stresses imposed by external heat.

In the following, the invention will be explained in more detail with reference to exemplifying embodiments illustrated in the attached drawings in which
Figure 1 is a sectional view of a first embodiment of the invention suitable for fastening a wall panel to a backing structure;
Figure 2 is a sectional view of a second embodiment of the invention suitable for fastening a wall panel to a backing structure;
Figure 3 is a sectional view of the fastening system shown in Fig. 2, now with the adjacent wall panels jointed with each other;
Figure 4 is a perspective view of fastening members used in the fastening system shown in Figs. 2 and 3;
Figure 5 is a sectional view of a third embodiment of the invention during the mounting step of the panels;
Figure 6 is a sectional view of wall panels mounted using the fastening system shown in Fig. 5;
Figure 7 is a longitudinal side of a first half of a fastening member suitable for gripping the tongue-and-groove joint shown in Figs. 5 and 6;
Figure 8 is a cross-sectional view of the fastening member shown in Fig. 7;
Figure 9 is a longitudinal side of a second half of a fastening member suitable for gripping the tongue-and-groove joint shown in Figs. 5 and 6; and
Figure 10 is a cross-sectional view of the fastening member shown in Fig. 9.

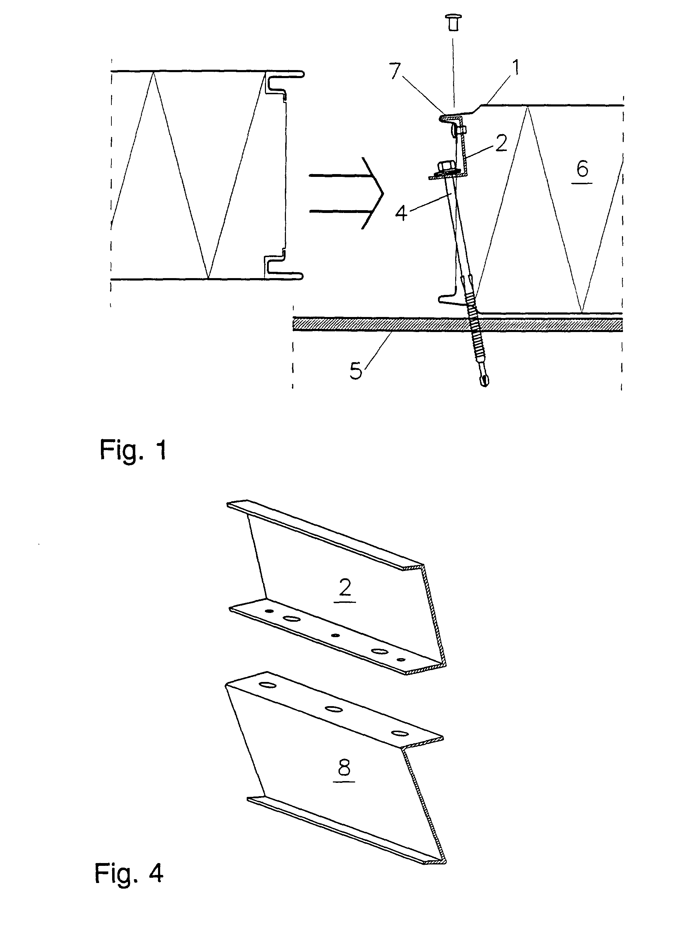

Referring to Fig. 1, the embodiment shown therein is adapted for anchoring wall panels comprising a two-sided skin structure having a thermal insulation 6 placed between the lining skins. The linings are shaped at the region of the panel edges into mating edges of a tongue-and-groove joint for the purpose of joining the panels with each other. During the installation of the panels, one of the panels is first fastened to the backing structure by its edge. Then, the next panel will be correctly aligned in place simply by pushing the tongue-and-groove joint laterally home.

In a first embodiment of the invention, the fastening device incorporates a claw clamp member 2 shaped to firstly grip the tongue-and-groove joint from under the panel edge and to secondly accept an anchoring member which in the illustrated embodiment is a fixing screw 4. In the thickness direction of the wall panel, the dimension of the claw clamp member 2 is smaller than the panel thickness. In practice, the claw clamp member can be made into a continuous U-shaped section, whose one side is dimensioned suitable for slipping by virtue of the resilience of the thermal insulation 6 under the joint lip 7 pleated at the edge of the outer lining 1. The other side of the claw clamp section may be made slightly longer to provide a sufficiently strong attachment for a fixing screw 4. The screw 4 is dimensioned to extend essentially through the entire thickness of the wall panel, and thus, this screw 4 is the only metallic element passing through the interpanel joint essentially for the entire thickness of the wall panel. Said screw 4 can be directed for most of its length embedded in the thermal insulation 6 of the wall panel, where it remains protected against any stresses from external heat. For different applications, the design of the screw 4 can be varied suitably. In the illustrated embodiment, the screw is made self-tapping, whereby the screw can be driven first through any parts of the panels as required, and then, further through the backing structure 5 and finally tightened to exert a sufficient anchoring force. The claw clamp element 2 itself may be fixed in place into the tongue-and-groove structure 7 using, e.g., screws or similar fixtures driven through the skin lining 1. After the fastening step of the panel is completed, the adjacent panel is pushed in place by first aligning the mating surfaces of the interpanel joint in the manner shown in the drawing.

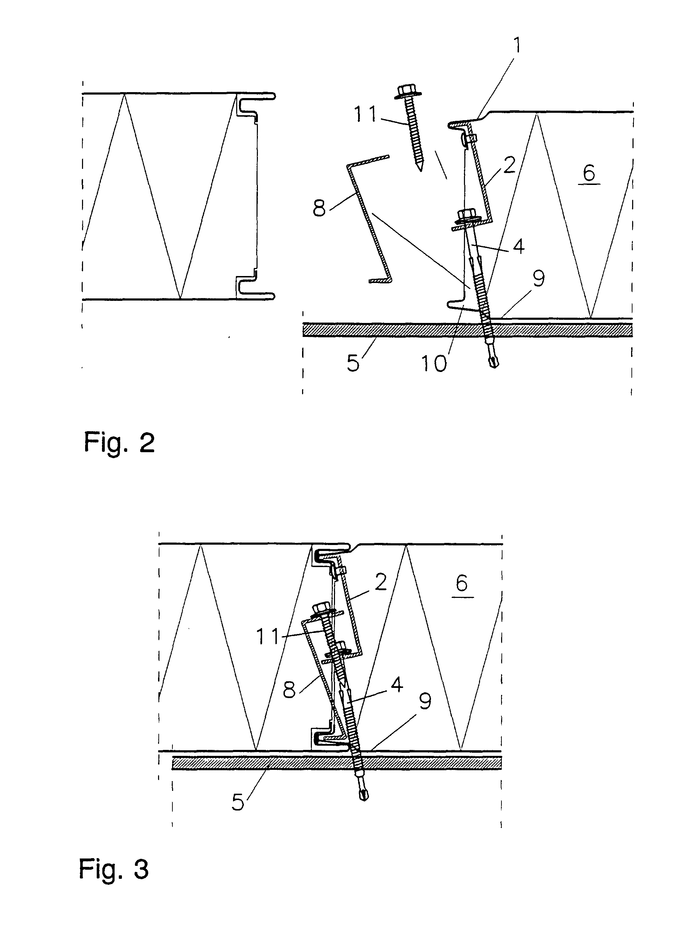

Referring to Fig. 2, a second embodiment of the invention shown therein has also the inner balance skin lining of the wall panel provided with a fastening device. This type of fastening device incorporates a second claw clamp member 8 corresponding to the claw clamp member 2 designed for the outer skin lining. The claw clamp member 8 is shaped for slipping under the joint lip formed to the edge of the inner lining and is provided with a Z-fold or other suitable shape for accepting a fixing screw 11. In the illustrated embodiment, the fixing screw is shown driven onto the claw clamp member of the outer skin lining, whereby the other Z-fold of the member is shaped appropriately to accept said fixing screw. Alternatively, the claw clamp member 8 fastening the inner skin lining 9 can be attached directly to the backing structure 5.

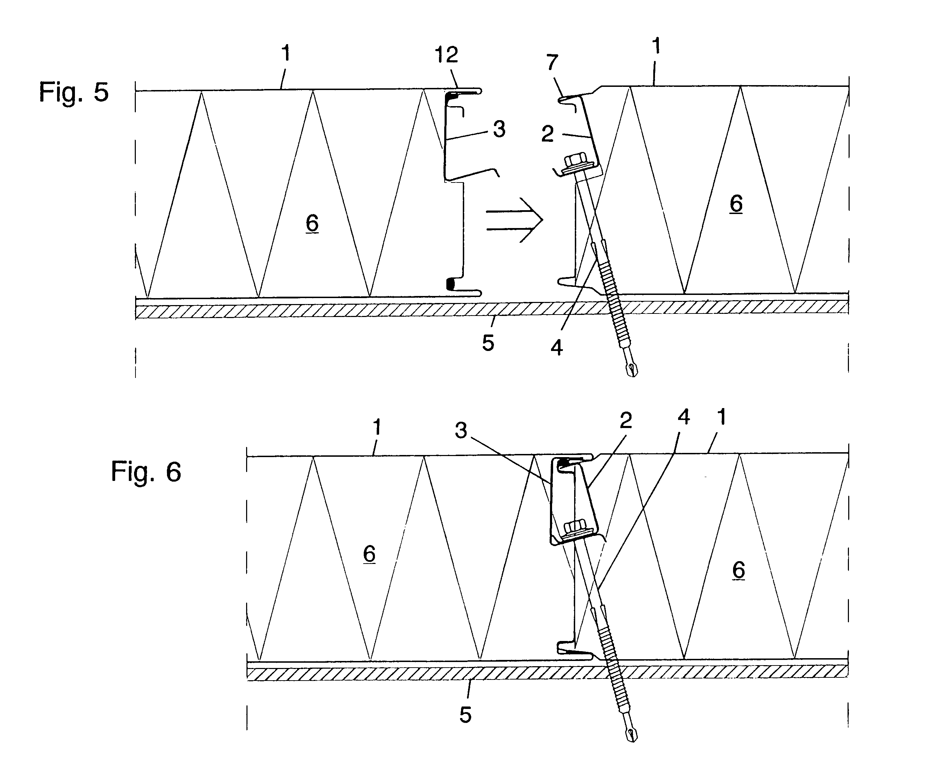

Referring to Fig. 3, a wall panel system anchored using the second embodiment of the invention is shown readyinstalled. In Fig. 4 is shown an illustration of an exemplifying shaping of the claw clamp members 2 and 8 used in a practical embodiment of the fastening device.

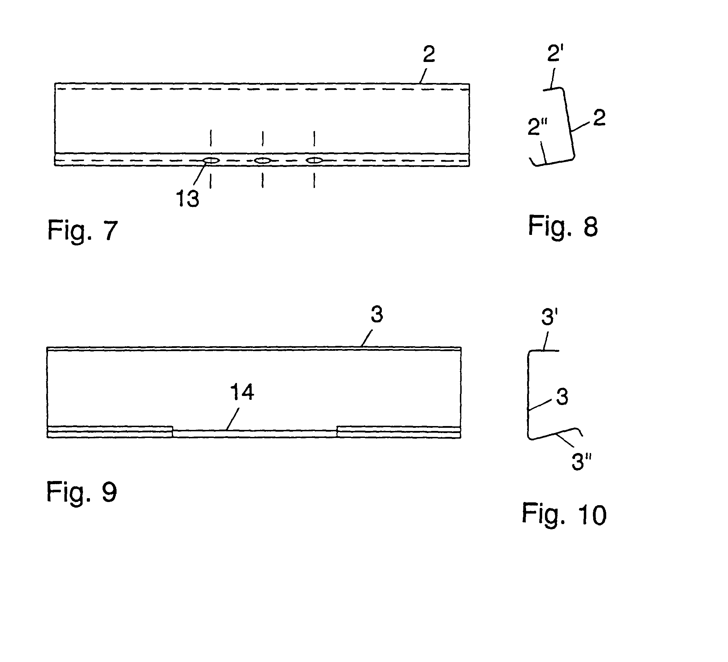

In the embodiment shown in Figs. 5 - 10, two claw clamp members 2 and 3 are used that in paired cooperation with each other form a fastening device capable of anchoring the mating lips 7 and 12 of a tongue-and-groove joint of adjacent wall panels. These claw clamp members are fabricated into essentially U-shaped sections, in which one side of the section, namely, the claw clamp Z-folds 2' and 3', respectively, is dimensioned to fit under the joint lips 7 and 12, respectively, formed to the mating edges of the outer lining 1 of the tongue-and-groove joint structure of the wall panel being installed. On the Z-fold 2" opposed to the clamping Z-fold, one of these claw clamp members is provided with a hole 13 suited to accept a fixing screw 4.

Correspondingly, the opposed the claw member 3 is dimensioned and shaped by its clamping Z-fold 3" to slip in springing manner under the opposed clamping Z-fold 2" when the panels are pushed together at their joint. To avoid collision with the fixing screw 4, the Z-fold 3" is provided with a compatible notch 14. The edges of the Z-folds 2" and 3", respectively, are advantageously shaped to provide guidance to the mating movement of the clamp members 2 and 3.

Said claw clamp members 2 and 3 are advantageously made from continuous sections cut to lengths of about 20-30 cm, whereby one such length is used per each anchorage point of the joint. However, there is either no practical hindrance for making the claw clamp members 2 and 3 into full-length continuous sections extending over the entire joint and fixing the sections to the backing structure 5 of the wall panel at suitable spacings with screws 4.

The above-described fastening system makes it possible to anchor a skin-structure wall panel equipped with mating tongue-and-groove joint edges at its edges to a backing structure at the interpanel joints so that each of the interjoining panels will be directly subjected to the fastening force of the fastening device and that the finished interpanel joint is free from any discernible members or installation marks related to the fastening method. A further important benefit is the minimized number of metallic, heat-conducting members extending through the entire thickness of the wall panel in the interpanel joint area.

## Claims

1. A device for fastening a wall panel to a backing structure (5), the panel comprising at least an outer skin lining (1) and a thermal insulation (6) placed under said skin lining, and having at least one of the edges of the outer skin lining shaped into tongue-and-groove joint surface (7) serving to join the panel to an adjacent panel, said fastening device comprising a claw clamp member (2) capable of gripping said tongue-and-groove joint from the inside of the panel joint, and a fixing member (4) suitable for anchoring said claw clamp member (2) to said backing structure (5), whereby in the thickness direction of the panel, the dimension of the claw member (2) is smaller than the panel thickness, **characterized in that** the claw clamp member (2) grips the tongue-and-groove joint (7) from the inner surface of the outer skin lining (1).

2. A fastening device as defined in claim 1 for use with wall panels also including an inner balance skin lining (9), **characterized in that** the fastening device incorporates a second claw clamp member (8) shaped to grip the tongue-and-groove joint surface (10) of the inner skin lining (9) of the wall panel from inside and to accept a fixing element (11) serving to attach said second claw clamp member (8) to said first claw clamp member (2).

3. A fastening device as defined in claim 1, **characterized in that** said fastening device incorporates a second claw clamp member (3), which is shaped to grip the inner side of the tongue-and-groove joint surface (12) of the outer skin lining (1) of the adjacent wall panel, from the inside of the joint, and that both claw clamp members (2,3) are shaped to interlock with each other during the mounting step of the wall panels.

## Patentansprüche

1. Vorrichtung zum Befestigen eines Wandelements an einer Tragstruktur (5), wobei das Wandelement mindestens eine äussere Verkleidung (1) und eine unter der Verkleidung liegende thermische Isolierung (6) umfasst, wobei mindestens eine der Kanten der äusseren Verkleidung zu einer nut- und federartige Verbindungsoberfläche (7) ausgebildet ist, die dazu dient, das Wandelement mit einem benachbarten Wandelement zu verbinden, und die Vorrichtung ein krallenförmiges Klemmelement (2) aufweist, das die nut- und federartige Verbindung von der Innenseite der Verbindung der Wandelemente aus greifen kann, und mit einem Befestigungsmittel (4), das geeignet ist, das krallenförmige Klemmelement (2) in der Tragstruktur (5) zu verankern, wobei die Abmessung des krallenförmigen Klemmelements (2) in Richtung der Dicke des Wandelements kleiner ist als die Dicke des Wandelements, **dadurch gekennzeichnet, daß** das krallenförmige Klemmelement (2) von der Innenfläche der äusseren Verkleidung (1) die nut- und federartige Verbindung (7) greift.

2. Vorrichtung nach Anspruch 1 zur Verwendung mit Wandelementen, die auch eine innere Ausgleichsverkleidung (9) aufweisen, **dadurch gekennzeichnet, dass** die Vorrichtung ein zweites krallenförmiges Klemmelement (8) aufweist, das so geformt ist, dass es die nut- und federartige Verbindungsoberfläche (10) der inneren Ausgleichsverkleidung (9) des Wandelements von innen greift und ein Befestigungsmittel (11), das das zweite krallenförmige Klemmelement (8) an dem ersten krallenförmigen Klemmelement (2) befestigt, aufnimmt.

3. Vorrichtung nach Anspruch 1, **dadurch gekennzeichnet, dass** die Vorrichtung ein zweites krallenförmiges Klemmelement (3) aufweist, das so geformt ist, dass es die innere Seite der nut- und federartigen Verbindungsoberfläche (12) der Aussenverkleidung (1) des benachbarten Wandelements von der Innenseite der Verbindung her greift und dass beide krallenförmigen Klemmelemente (2,3) so geformt sind, dass sie bei der Montage der Wandelemente ineinandergreifen.

## Revendications

1. Dispositif de fixation d'un panneau de paroi à une structure de support (5), le panneau comprenant au moins un revêtement extérieur mince ou de peau (1) et une isolation thermique (6) placée sous le dit revêtement de peau, et au moins un des bords du revêtement de peau extérieur étant configuré en une surface de joint à rainure et languette (7) servant à relier le panneau à un panneau adjacent, le dit dispositif de fixation comprenant un élément de serrage à griffe (2) pouvant serrer le dit joint à rainure et languette à partir de l'intérieur du joint de panneaux, et un élément de fixation (4) pouvant ancrer le dit élément de serrage à griffe (2) à la dite structure de support (5) de sorte que, dns la direction de l'épaisseur du panneau, la dimension de l'élément à griffe (2) est plus petite que l'épaisseur du panneau , **caractérisé en ce que** l'élément de serrage à griffe (2) serre le joint à rainure et languette (7) à partir de la surface intérieure du revêtement de peau extérieur (1).

2. Dispositif de fixation selon la revendication 1, utilisable avec des panneaux de paroi comprenant également un revêtement de peau intérieur d'équilibrage (9), **caractérisé en ce que** le dispositif de fixation comprend un deuxième élément de serrage à griffe (8) configuré de manière à serrer la surface (10) du joint à rainure et languette du revêtement de peau intérieur (9) du panneau de paroi à partir de l'intérieur, et à accepter un élément de fixation (11) servant à attacher le dit deuxième élément de serrage à griffe (8) au dit premier élément de serrage à griffe (2).

3. Dispositif de fixation selon la revendication 1, **caractérisé en ce que** le dit dispositif de fixation comprend un deuxième élément de serrage à griffe (3) qui est configuré de manière à serrer le côté intérieur de la surface de joint à rainure et languette (12) du revêtement de peau extérieur (1) du panneau de paroi adjacent, à partir de l'interieur du joint, et en ce que les deux éléments de serrage à griffe (2, 3) sont configurés de manière à se verrouiller mutuellement pendant l'étape de montage des panneaux de paroi.
